(19) Europäisches Patentamt
European Patent Office
Office européen des brevets

(11) **EP 4 394 674 A1**

(12) **EUROPEAN PATENT APPLICATION**
published in accordance with Art. 153(4) EPC

(43) Date of publication:
**03.07.2024 Bulletin 2024/27**

(21) Application number: **22923231.9**

(22) Date of filing: **08.08.2022**

(51) International Patent Classification (IPC):
**G06Q 10/08** (2023.01)

(52) Cooperative Patent Classification (CPC):
Y04S 10/50

(86) International application number:
**PCT/CN2022/110936**

(87) International publication number:
**WO 2023/142427 (03.08.2023 Gazette 2023/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.01.2022 CN 202210083327**

(71) Applicant: **Beijing Jingdong Zhenshi Information Technology Co., Ltd.**
**Beijing, Beijing 100086 (CN)**

(72) Inventors:
• **WU, Shengnan**
  **Beijing 100086 (CN)**
• **ZHUANG, Xiaotian**
  **Beijing 100086 (CN)**
• **TONG, Lu**
  **Beijing 100086 (CN)**
• **NIU, Zhiqiang**
  **Beijing 100086 (CN)**

(74) Representative: **Vossius & Partner**
**Patentanwälte Rechtsanwälte mbB**
**Siebertstraße 3**
**81675 München (DE)**

(54) **DISTRIBUTION ROUTE DETERMINATION METHOD AND APPARATUS, AND ELECTRONIC DEVICE AND READABLE STORAGE MEDIUM**

(57) A distribution route determination method and apparatus, and an electronic device and a readable storage medium, which belong to the technical field of information. The method may comprise: generating an initial distribution network according to logistics-related information (101); adjusting the initial distribution network to a target distribution network by means of backing up transit nodes in the initial distribution network (102); then determining an objective function on the basis of the target distribution network and the corresponding logistics-related information, wherein the objective function is used for representing the transportation efficiency of the target distribution network (103); and finally, according to the objective function and a first constraint condition, calculating the transportation efficiency corresponding to the target distribution network, so as to select a distribution route having the minimum transportation efficiency (104). In this way, there is always a transportation relationship between transit nodes during an actual logistics transportation process, and a distribution network is adjusted by means of building virtual nodes corresponding to the transit nodes, such that the adjusted distribution network better conforms to an actual logistics distribution scenario, and a generated distribution route is more consistent with an actual distribution and transportation route.

FIG.1

**Description**

**CROSS REFERENCES TO RELATED APPLICATION**

The present disclosure claims priority to Chinese Patent Application 202210083327.4, titled "Distribution Route Determination Method and Apparatus, and Electronic Device and Readable Storage Medium", filed on January 25, 2022, the entire contents of which are incorporated herein by reference.

**TECHNICAL FIELD**

The present disclosure belongs to the field of information technology, and in particular, relates to a distribution route determination method, apparatus, electronic device and readable storage medium.

**BACKGROUND**

With the development of e-commerce, more and more attention has been paid to the construction of logistics distribution network. People often establish a logistics distribution network based on the location information of nodes, such as, a three-layer logistics distribution network from a warehouse to a sorting center and from the sorting center to a station. However, in the actual order distribution process, there are still great differences between the established logistics distribution network and the actual distribution process. Therefore, it is necessary to optimize the established logistics distribution network.

In the related art, the optimization of the logistics distribution network is usually achieved by adjusting the transportation relationship between different types of nodes in the known logistics distribution network, so as to realize the optimization of the logistics distribution network. However, the distribution network generated in this way does not conform to the distribution network in the actual logistics distribution, resulting in a significant difference between the generated distribution route and the actual distribution transportation route, which in turn leads to a relatively low accuracy of the transportation cost calculated according to the distribution network.

**SUMMARY**

The purpose of the embodiments of the present disclosure is to provide a distribution route determination method, apparatus, electronic device and readable storage medium, which can solve the problem that the generated distribution network does not conform to the distribution network in the actual logistics distribution, resulting in the generated distribution route being significantly different from the actual distribution transportation route, which in turn leads to a relatively low accuracy of the transportation cost calculated according to the distribution network.

In order to solve the above-mentioned technical problems, the present disclosure is implemented as follows.

In a first aspect, an embodiment of the present disclosure provides a distribution route determination method, the method including:

generating an initial distribution network based on logistics-related information;
constructing a virtual node based on a transit node in the initial distribution network, and adjusting the initial distribution network to a target distribution network;
determining an objective function based on the target distribution network and the corresponding logistics-related information; the objective function being used to represent a transportation efficiency of the target distribution network; and
calculating the transportation efficiency corresponding to the target distribution network according to the objective function and a first constraint condition, so as to select a distribution route with a minimum transportation efficiency; the first constraint condition being determined according to a maximum carrying capacity on the transit node.

In a second aspect, an embodiment of the present disclosure provides a distribution route determination apparatus, including:

a generating module, configured to generate an initial distribution network according to logistics-related information;
an adjustment module, configured to construct a virtual node based on a transit node in the initial distribution network, and adjust the initial distribution network to a target distribution network;
a first determination module, configured to determine an objective function based on the target distribution network and the corresponding logistics-related information; the objective function being used to represent a transportation efficiency of the target distribution network; and

a first calculation module, configured to calculate the transportation efficiency corresponding to the target distribution network according to the objective function and a first constraint condition, so as to select a distribution route with a minimum transportation efficiency; the first constraint condition being determined according to a maximum carrying capacity on the transit node.

In a third aspect, an embodiment of the present disclosure provides an electronic device, which includes a processor, a memory, and a program or instruction stored in the memory and operable on the processor, and when the program or instruction is executed by the processor, the steps of the distribution route determination method described in the first aspect are implemented.

In a fourth aspect, an embodiment of the present disclosure provides a readable storage medium, on which a program or instruction is stored, and when the program or instruction is executed by a processor, the steps of the distribution route determination method described in the first aspect are implemented.

In the fifth aspect, an embodiment of the present disclosure provides a chip, the chip includes a processor and a communication interface, the communication interface is coupled to the processor, and the processor is configured to run a program or instruction, so as to implement the distribution route determination method described in the first aspect.

To sum up, the distribution route determination method provided by the embodiments of the present disclosure can generate an initial distribution network according to logistics-related information, construct the virtual node based on the transit node in the initial distribution network, adjust the initial distribution network to a target distribution network, and then determine the objective function based on the target distribution network and the corresponding logistics-related information, the objective function being used to represent the transportation efficiency of the target distribution network, and finally, according to the objective function and the first constraint condition, calculate the transportation efficiency corresponding to the target distribution network to select the distribution route with the minimum transportation efficiency, where the first constraint condition is determined according to the maximum carrying capacity of the transit node. In this way, in the actual logistics transportation process, there is often a transportation relationship between the transit nodes, the distribution network is adjusted by constructing the virtual nodes corresponding to the transit nodes, so that the obtained target distribution network is more in line with the actual logistics distribution scene, and the generated distribution route is more consistent with the actual distribution transportation route, then the transportation efficiency calculated based on the target distribution network is more accurate, and accordingly the selection of the distribution route with the smallest transportation efficiency is more authentic.

The above description is only an overview of the technical solutions of the present disclosure. In order to better understand the technical means of the present disclosure and to implement according to the contents of the description, and in order to make the above and other purposes, features and advantages of the present disclosure more obvious and understandable, the specific implementations of the present disclosure are enumerated below.

## BRIEF DESCRIPTION OF THE DRAWINGS

In order to more clearly illustrate the technical solutions in the embodiments of the present disclosure or related art, the following will briefly introduce the drawings that need to be used in the descriptions of the embodiments or the related art. Obviously, the drawings in the following description are some embodiments in the present disclosure, and those skilled in the art can also obtain other drawings based on these drawings without any creative effort.

FIG. 1 is a flowchart of steps of a distribution route determination method provided by an embodiment of the present disclosure;
FIG. 2 is a schematic diagram of an initial distribution network provided by an embodiment of the present disclosure;
FIG. 3 is a schematic diagram of a target distribution network provided by an embodiment of the present disclosure;
FIG. 4 is a schematic diagram of a distribution route determination process provided by an embodiment of the present disclosure;
FIG. 5 is a block diagram of a distribution route determination apparatus provided by an embodiment of the present disclosure;
FIG. 6 is an electronic device provided by an embodiment of the present disclosure;
FIG. 7 is a schematic diagram of a hardware structure of an electronic device according to an embodiment of the present disclosure.

## DETAILED DESCRIPTION

The following will clearly and completely describe the technical solutions in the embodiments of the present disclosure with reference to the accompanying drawings in the embodiments of the present disclosure. Apparently, the described embodiments are part of the embodiments of the present disclosure, not all of them. Based on the embodiments in the present disclosure, all other embodiments obtained by persons of ordinary skill in the art without creative efforts fall within the protection scope of the present disclosure.

The terms "first", "second" and the like in the specification and claims of the present disclosure are used to distinguish similar objects, and are not used to describe a specific order or sequence. It should be understood that the terms so used are interchangeable under appropriate circumstances such that the embodiments of the present disclosure are capable of being implemented in a sequence other than those illustrated or described herein, and the objects distinguished from each other by using "first", "second", etc. are generally of one type, and the number of objects is not limited. For example, there may be one or more first objects. In addition, "and/or" in the specification and claims means at least one of the connected objects, and the character "/" generally means that the related objects have an "or" relationship.

The distribution route determination method provided by the embodiments of the present disclosure will be described in detail below through specific embodiments and application scenarios thereof with reference to the accompanying drawings.

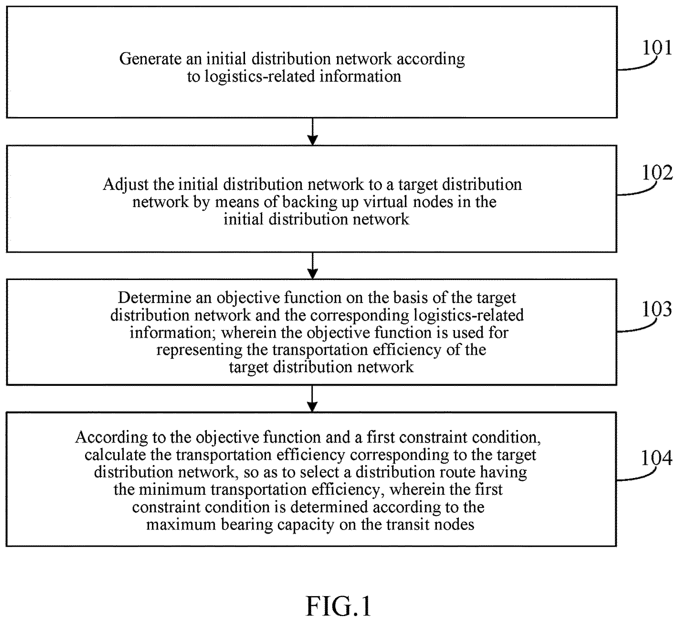

FIG. 1 is a flowchart of the steps of a distribution route determination method provided by an embodiment of the present disclosure. As shown in FIG. 1, the method may include the following steps.

In step 101, an initial distribution network is generated according to logistics-related information.

In the embodiments of the present disclosure, for the logistics-related information, information input by users may be received and the input information may be used as the logistics-related information, or information stored on the network platform may be obtained and the obtained information may be used as the logistics-related information. The logistics-related information may include node information, distance information between nodes, and order demand information, etc., which is not limited in the present disclosure. The initial distribution network may be a three-layer logistics distribution network. For example, when the nodes included in the distribution network are a warehouse, a station, and a sorting center, the three-layer distribution network can be obtained as a distribution network from a warehouse to a sorting center to a station.

In the embodiments of the present disclosure, generating the initial distribution network according to the logistics-related information may include: first determining the type and number of nodes required in the distribution network and the distance between individual nodes based on the logistics-related information, and then building a node connection network based on the type and number of nodes and the distance between individual nodes, and then determining a transportation direction according to the attributes of the nodes. For example, when the node is the warehouse that issues the order, it needs to transport the order to the station that receives the order, then it can be determined that the transportation direction is a direction from the warehouse to the station. Finally, the initial distribution network is obtained based on the transport direction and the node connection network. It should be noted that the initial distribution network can be used to represent the possible transportation relationship between different nodes, that is, it can be a plurality of distribution routes that may exist according to the transportation direction, and the transportation direction may be from the sender to the receiver. The transportation direction may be determined in the initial distribution network.

In step 102, a virtual node is constructed based on a transit node in the initial distribution network, and the initial distribution network is adjusted to a target distribution network.

In the embodiments of the present disclosure, constructing a virtual node based on the transit node in the initial distribution network may be: copying the transit node in the initial distribution network, and using the copied transit node as the virtual node corresponding to the transit node, or establishing a new node, setting parameter information corresponding to the new node based on the transit node, and using the new node as the virtual node corresponding to the transit node. Constructing the virtual node based on the transit node in the initial distribution network and adjusting the initial distribution network to the target distribution network may be: adding the constructed virtual node to the initial distribution network and reconstructing the initial distribution network to obtain the target distribution network.

In the embodiments of the present disclosure, the initial distribution network may include a transit node, which may be an intermediate point for receiving and sending, such as a sorting center, and the initial distribution network may also include other nodes, which may be an order sending point and an order demand point, where the order sending point may be a warehouse only used to send orders, and the order demand point may be a station only used to receive orders.

It should be noted that since the initial distribution network may contain multiple types of nodes, the transportation relationship between nodes of different types may be a one-way transportation relationship to be selected, while the transportation relationship between nodes of the same type may be different. For example, there is no transportation relationship between nodes that are warehouses, but there may be a transportation relationship between nodes that are sorting centers. The transportation relationship may be a relationship between nodes when the order is distributed, and the transportation relationship may be determined according to the transportation direction. For example, when an order needs to be distributed from a warehouse 1 to a station 1, it can be obtained that there is a transportation relationship between the warehouse 1 and the station 1, and it is transported from the warehouse 1 to the station 1.

In step 103: an objective function is determined based on the target distribution network and the corresponding logistics-related information; the objective function being used to represent a transportation efficiency of the target distribution network.

In the embodiments of the present disclosure, the objective function may be obtained by performing statistics on the transportation efficiency when transporting the order on each distribution route according to the multiple distribution routes contained in the target distribution network and the corresponding logistics-related information, and the objective function may be used to represent the transportation efficiency of each distribution route on the target distribution network.

It should be noted that the transportation efficiency of the distribution route can be used to represent the transportation cost of the distribution route, it can also be used to represent the transportation time of the distribution route, and it can also be used to represent the transportation carrying capacity of the distribution route. Specifically, the transportation efficiency of the distribution route can be calculated through the transportation distance, the transportation order quantity and the corresponding parameter(s), and the objective function may be to determine whether there is a transportation relationship between each node based on multiple distribution routes, and to perform statistics on the transportation efficiency of the target distribution network. For example, when the distribution route is from the warehouse 1 to the sorting center 2 to the station 2, it can be determined that there is a transportation relationship between the warehouse 1 and the sorting center 2, there is a transportation relationship between the sorting center 2 and the station 2, and there is no transportation relationship between the warehouse 1 and the sorting center 1, and there is no transportation relationship between the sorting center 1 and the station 1.

In step 104: a transportation efficiency corresponding to the target distribution network is calculated according to the objective function and a first constraint condition, so as to select a distribution route with a minimum transportation efficiency; the first constraint condition being determined according to a maximum carrying capacity on the transit node.

In the embodiments of the present disclosure, calculating the transportation efficiency corresponding to the target distribution network according to the objective function and the first constraint condition may be to calculate the transportation efficiency of each distribution route under the target distribution network without exceeding the carrying capacity of the transit node, to determine the minimum transportation efficiency based on the calculated multiple transportation efficiencies, and to determine the distribution route corresponding to the minimum transportation efficiency.

It should be noted that the first constraint condition may be determined according to the carrying capacity of the transit node. Since the quantity of orders that can be stored on a transit node is limited, when a transit node is included in the distribution route, that is, if there is a transportation relationship on the transit node, it needs to be determined that the quantity of orders that are transported to the transit node cannot exceed the maximum carrying capacity on the transit node, and in the case that the quantity of orders exceeds the maximum carrying capacity on the transit node, it can be determined that there is no transportation relationship on the transit node. In the present disclosure, the quantity of stored orders on the transit node can also be monitored in real time. The transit node includes the quantity of stored orders and the quantity of orders to be stored on the distribution route. It is determined whether the distribution route includes a transportation relationship with the transit node by judging whether the sum of the quantity of orders to be stored and the quantity of stored orders will exceed the maximum carrying capacity on the transit node. In the case that the quantity of orders to be stored on the distribution route exceeds the maximum carrying capacity of the transit node 1, it can be determined that there is no transportation relationship between the distribution route and the transit node 1, and in the case that the quantity of orders to be stored on the distribution route will not exceed the maximum carrying capacity of the transit node 2, it can be determined that there is a transportation relationship between the distribution route and the transit node 1.

To sum up, the distribution route determination method provided by the embodiments of the present disclosure can generate an initial distribution network based on logistics-related information, construct the virtual node based on the transit node in the initial distribution network, adjust the initial distribution network to the target distribution network, and then determine the objective function based on the target distribution network and the corresponding logistics-related information. The objective function is used to represent the transportation efficiency of the target distribution network. Finally, according to the objective function and the first constraint condition, the corresponding transportation efficiency of the target distribution network is calculated so as to select the distribution route with the minimum transportation efficiency, where the first constraint condition is determined according to the maximum carrying capacity of the transit node. In this way, in the actual logistics transportation process, there is often a transportation relationship between the transit nodes, and the distribution network is adjusted by constructing the virtual node corresponding to the transit node, so that the obtained target distribution network is more in line with the actual logistics distribution scene, and the generated distribution route is more consistent with the actual distribution transportation route, thus the transportation efficiency calculated based on the target distribution network is more accurate, and accordingly the selection of the distribution route with the smallest transportation efficiency is more authentic.

Optionally, the initial distribution network in the embodiments of the present disclosure may include at least two transit nodes, and the above step of constructing a virtual node based on the transit node in the initial distribution network and adjusting the initial distribution network to a target distribution network may be include the following steps.

In step 1021, in the initial distribution network, at least two corresponding virtual nodes are constructed according to the at least two transit nodes.

In the embodiments of the present disclosure, it is possible to copy according to at least two transit nodes, and then use the copied node as the virtual node corresponding to the transit node, or new nodes may be created according to the number of the transit nodes, and the parameter information of the transit nodes is set to the newly created nodes, so as to obtain at least two corresponding virtual nodes. For example, the initial distribution network includes a transit node 1 and a transit node 2. By replicating the transit nodes, the transit node 1 is replicated to obtain a virtual node 1, and the transit node 2 is replicated to obtain a virtual node 2.

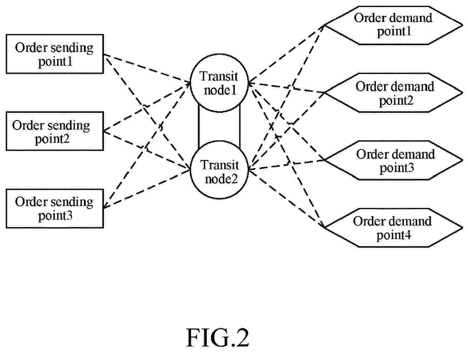

For example, FIG. 2 is a schematic diagram of an initial distribution network provided by an embodiment of the present disclosure. As shown in FIG. 2, the initial distribution network includes an order sending point 1, an order sending point 2, an order sending point 3, a transit node 1, a transit node 2, an order demand point 1, an order demand point 2, an order demand point 3, and an order demand point 4, where the order sending point 1 is connected to the transit node 1 and the transit node 2 respectively by dotted lines, the order sending point 2 is connected to the transit node 1 and the transit node 2 respectively by dotted lines, the order sending point 3 is connected to the transit node 1 and the transit node 2 respectively by dotted lines, the order demand point 1 is connected to the transit node 1 and the transit node 2 respectively by dotted lines, the order demand point 2 is connected to the transit node 1 and the transit node 2 respectively by dotted lines, the order demand point 3 is connected to the transit node 1 and the transit node 2 respectively by dotted lines, the order demand point 4 is connected to the transit node 1 and the transit node 2 respectively by dotted lines, and the transit node 1 and the transit node 2 are connected by a solid line. The dotted line connection can indicate that there may be a transportation relationship between nodes, which needs to be determined according to the decision-making design of the distribution route, and the solid line connection can indicate that there is actually an existing transportation relationship between nodes, which does not need to be determined by the decision-making design of the distribution route.

In step 1022, a two-way transportation relationship between the at least two transit nodes is adjusted to a one-way transportation relationship between the at least two transit nodes and the at least two virtual nodes to obtain a target distribution network.

In the embodiments of the present disclosure, the initial distribution network only represents the transportation relationship between nodes of different types, but the transportation relationship may also appear between nodes of the same type. For example, in the logistics distribution scenario, the order may be transferred between various sorting centers, therefore, a two-way transportation relationship may occur between nodes of the same type.

In the embodiments of the present disclosure, adjusting the two-way transportation relationship between at least two transit nodes to the one-way transportation relationship between at least two transit nodes and at least two virtual nodes may be to convert the two-way transportation relationship between the transit nodes in the initial distribution network into a one-way transportation relationship between the transit node and the virtual node corresponding to the transit node. For example, by copying the sorting center, the virtual sorting center 1 corresponding to the sorting center 1 and the virtual sorting center 2 corresponding to the sorting center 2 may be obtained, and a two-way transportation relationship between the sorting center 1 and the sorting center 2 in the initial distribution network may be adjusted to a one-way transportation relationship between the sorting center 1 and the virtual sorting center 2.

It should be noted that when adjusting the transportation relationship between the transit nodes, if the adjustment result is the one-way transportation relationship between the transit node and the virtual transit node corresponding to this transit node, the transportation relationship between the transit node and the virtual transit node is an invalid route. For example, if the adjustment result is a one-way transportation relationship between the transit node 1 and the virtual transit node 1, it can be obtained that the one-way transportation relationship between the transit node 1 and the virtual transit node 1 is an invalid route, and the distance between the transit node 1 and the virtual transit node 1 is zero.

In the embodiments of the present disclosure, by copying at least two transit nodes in the initial distribution network to generate at least two corresponding virtual nodes, the two-way transportation relationship between the at least two transit nodes is adjusted to the one-way transportation relationship between at least two transit nodes and at least two virtual nodes, so as to obtain the target distribution network. In this way, the transportation relationship between the transit nodes can be intuitively expressed to avoid missing the transportation relationship between the transit nodes when determining the distribution route, which makes the generated distribution route inconsistent with the actual distribution route, and therefore the accuracy of the subsequent calculation of transportation efficiency can be improved to a certain extent.

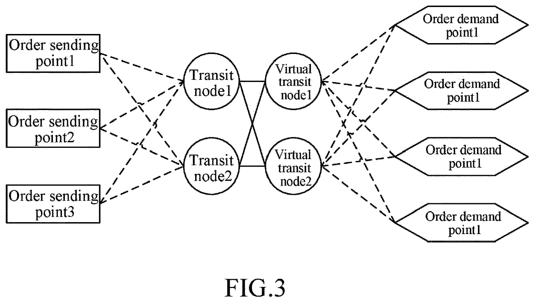

For example, FIG. 3 is a schematic diagram of a target distribution network provided by an embodiment of the present disclosure. As shown in FIG. 3, the target distribution network includes an order sending point 1, an order sending point 2, an order sending point 3, a transit node 1, a transit node 2, a virtual transit node 1, a virtual transit node 2, an order demand point 1, an order demand point 2, an order demand point 3, and an order demand point 4, where the order sending point 1 is connected to the transit node 1 and the transit node 2 respectively by dotted lines, the order delivery point 2 is connected to the transit node 1 and the transit node 2 respectively by dashed lines, the order sending point 3 is connected to the transit node 1 and the transit node 2 respectively by dashed lines, the order demand point 1 is connected to the virtual transit node 1 and the virtual transit node 2 respectively by dashed lines, the order demand point 2 is connected to the virtual transit node 1 and the virtual transit node 2 respectively by dotted lines, the order demand point 3 is connected to the virtual transit node 1 and the virtual transit node 2 respectively by dotted lines, the order demand point 4 is connected to the virtual transit node 1 and the virtual transit node 2 respectively by dotted lines, while the transit node 1 is connected to the virtual transit node 1 and the virtual transit node 2 respectively by solid lines, and the transit node 2 is connected to the virtual transit node 1 and the virtual transit node 2 respectively by solid lines. The dotted line connection can represent that there may be a transportation relationship between the nodes, which needs to be determined according to the decision-making design of the distribution route. The solid line connection can indicate that there is actually a transportation relationship between the nodes, which needs not to be determined by the decision-making design of the distribution route.

Optionally, in the embodiments of the present disclosure, the parameter information of the virtual node itself is the same as that of the transit node. For example, the parameter information of the node itself such as the maximum inventory on the virtual node, the type of goods received, and the transportation requirement can be the same as that of the corresponding transit node. The relevant parameter between the transit node and the virtual node can be determined according to the actual node represented by the virtual node. For example, when the transit node and the virtual node represent the same node, the distance between the transit node and the virtual node is zero, and when the transit node and the virtual node represent different nodes, the distance between the transit node and the virtual node is the distance between the transit node and the transit node corresponding to the virtual node. The relevant parameter can also be information such as transportation duration and transportation cost between the transit node and the virtual node. Since the transportation duration, transportation cost and other information are determined by the distance between the transit node and the virtual node, when the transit node and the virtual node represent the same node, the transportation duration and transportation cost between the transit node and the virtual node are zero; when the transit node and the virtual node represent different nodes, the transportation duration, transportation cost and other information between the transit node and the virtual node are equivalent to the transportation duration, transportation cost, and other information between the transit node and the transit node corresponding to the virtual node.

Optionally, the initial distribution network in the embodiments of the present disclosure may also include an order sending point and an order demand point, and the logistics-related information may include distances between individual nodes and a target order quantity. The above-mentioned step of determining an objective function based on the target distribution network and the corresponding logistics-related information may include the following steps.

In step 1031, a first efficiency, a second efficiency, a the third efficiency are determined respectively according to the distance between the nodes and the target order quantity; the first efficiency is a transportation efficiency of transporting from the order sending point to the transit node; the second efficiency is a transportation efficiency of transporting from the virtual transit node to the order demand point; the third efficiency is a transportation efficiency of transporting from the transit node to the virtual transit node.

In the embodiments of the present disclosure, in the distribution network, the transportation efficiency for any route section can be determined according to the distance between two nodes on the route section and the order quantity passing through the route section, therefore, the first efficiency can be determined according to the target order quantity and the distance of transportation from the order sending point to the transit node, the second efficiency can be determined according to the target order quantity and the distance of transportation from the virtual transit node to the order demand point, and the third efficiency can be determined according to the target order quantity and the distance of transportation from the transit node to the virtual transit node.

It should be noted that, in order to improve the accuracy of determining the transportation efficiency, the distance between nodes in the embodiments of the present disclosure may be the actual transportation distance between two nodes during the actual transportation process, rather than the straight-line distance between nodes.

In step 1032, based on the transportation relationship in the target distribution network, statistics is performed on the first efficiency, the second efficiency and the third efficiency to obtain the objective function.

In the embodiments of the present disclosure, the target distribution network contains multiple distribution routes, and whether there is a transportation relationship between the same two nodes in different distribution routes may be different. For example, in a distribution route 1, there is a transportation relationship between the order sending point 1 and the transit node 2, while in a distribution route 2, there is no transportation relationship between the order sending point 1 and the transit node 2. Therefore, when calculating the transportation efficiency of the target distribution network, the objective function can be obtained by counting the transportation relationship between individual nodes and then calculating in combination with the first efficiency, the second efficiency and the third efficiency.

Optionally, in the embodiments of the present disclosure, the above-mentioned step of performing statistics on the first efficiency, the second efficiency, and the third efficiency to obtain the objective function based on the transportation relationship in the target distribution network may also include the following steps.

In step 1032a, according to the transportation relationship between each of the order sending points and each of the transit nodes, the first efficiencies are summed to obtain a first sub-function; according to the transportation relationship between each of the virtual transit nodes and each of the order demand points, the second efficiencies are summed to obtain a second sub-function; according to the transportation relationship between each of the transit nodes and each of the virtual transit nodes, the third efficiencies are summed to obtain a third sub-function.

In the embodiments of the present disclosure, the first sub-function may be obtained by performing statistics on multiple distribution routes contained in the target distribution network, determining the transportation relationship between each order sending point and each transit node, and summing the first efficiencies based on the transportation relationship between each order sending point and each transit node, the second sub-function may be obtained by determining the transportation relationship between each virtual transit node and each order demand point, and summing the second efficiencies based on the transportation relationship between each virtual transit node and each order demand point, and the third sub-function may be obtained by determining the transportation relationship between each transit node and each virtual transit node, and summing the third efficiencies based on the transportation relationship between each transit node and each virtual transit node.

In the embodiments of the present disclosure, the target distribution network may be a structure of order sending point-transit node-virtual transit node-order demand point, where the order sending point is K, and the target distribution network may contain multiple order sending points k, the transit node is L, and the target distribution network may contain multiple transit nodes 1, the virtual transit node is L', and the target distribution network may contain multiple virtual transit nodes 1', the order demand point is J, and the target distribution network may contain multiple order demand points j. The transportation relationship between each order sending point K and each transit node L can be input into the first sub-function to calculate the product of the transportation relationship, the distance between each order sending point K and each transit node L and the target order quantity, and then the product is determined as the transportation efficiency from the order sending point K to the transit node L, where the first sub-function may be:

$$L1 = \sum_{k \in K} \sum_{l \in L} \sum_{j \in J} f_{kj} d_{kl} x_{kl}$$

$\Sigma_{k \in K} \Sigma_{l \in L} \Sigma_{j \in J} f_{kj} d_{kl} x_{kl}$ indicates the statistics of the transportation efficiency from each order sending point to each transit node, $f_{kj}$ is the target order quantity between the order sending point K and the order demand point J, $d_{kl}$ is the distance between the order sending point K and the transit node L, $x_{kl}$ is the transportation relationship between the order sending point K and the transit node L, $x_{kl}$ may be a decision variable, when there is a transportation relationship between the order sending point K and the transit node L, $x_{kl}=1$, and when there is no transportation relationship between the order sending point K and the transit node L, $x_{kl}=0$.

It is also possible to input the transportation relationship between each virtual transit node L' and each order demand point J into the second sub-function to calculate the product of the transportation relationship, the distance between each virtual transit node L' and each order demand point J, and the target order quantity, and then the product is determined as the transportation efficiency from the virtual transit node L' to the order demand point J, where the second sub-function may be:

$$L2 = \sum_{l' \in L'} \sum_{j \in J} \sum_{k \in K} f_{kj} d_{l'j} y_{l'j}$$

$\Sigma_{l' \in L'} \Sigma_{j \in J} \Sigma_{k \in K} f_{kj} d_{l'j} y_{l'j}$ represents the statistics of the transportation efficiency between each virtual transit node L' and each order demand point J, $d_{l'j}$ is the distance between the virtual transit node L' and the order demand point J, $y_{l'j}$ is the transportation relationship between the virtual transit node L' and the order demand point J, $y_{l'j}$ may be a decision variable, when there is a transportation relationship between the virtual transit node L' and the order demand point J, $y_{l'j}=1$, when there is no transportation relationship between the virtual transit node L' and the order demand point J, $y_{l'j}=0$.

It is also possible to input the transportation relationship between each transit node L and each virtual transit node L' into the third sub-function to calculate the product of the transportation relationship, the distance between each transit node L and each virtual transit node L', and the target order quantity, and then the product is determined as the transportation efficiency from the transit node L to the virtual transit node L', where the third sub-function may be:

$$L3 = \sum_{l \in L} \sum_{l' \in L'} \sum_{k \in K} \sum_{j \in J} f_{kj} d_{ll'} x_{kl} y_{l'j}$$

$\Sigma_{l \in L} \Sigma_{l' \in L'} \Sigma_{k \in K} \Sigma_{j \in J} f_{kj} dll' x_{kl} y_{l'j}$ represents the statistics of the transportation efficiency between each transit node L and each virtual transit node L', $d_{ll'}$ is the distance between the transit node L and the virtual transit node L'.

Since the distribution route in the target distribution network is usually transporting from the order sending point K to the order demand point J, which will pass through the transit node L and the virtual transit node L', when determining the transportation relationship between the transit node L and the virtual transit node L', whether there is a transportation relationship between the transit node L and the virtual transit nodes L' can be determined by determining whether there is a transportation relationship between the order sending point K and the transit node L, and whether there is a transportation relationship between the virtual transit node L' and the order demand point J, that is, $x_{kl}y_{l'j}$ may represent the transportation relationship between the transit node L and the virtual transit node L'. Specifically, when there is a transportation relationship between the order sending point K and the transit node L, and there is a transportation relationship between the virtual transit node L' and the order demand point J, it can be determined that there is a transportation relationship between the transit node L and the virtual transit node L', that is, $x_{kl}y_{l'j}$=1; when there is no transportation relationship between the order sending point K and the transit node L, or between the virtual transit node L' and the order demand point J, it can be determined that there is no transportation relationship between the transit node L and the virtual transit node L', that is, $x_{kl}y_{l'j}$=0.

It should be noted that, in the embodiments of the present disclosure, after the objective function is determined, the invalid route can be screened out according to the statistically obtained distribution routes. Specifically, an optional distribution route in the target distribution network is supposed to be: order sending point k1-transit node l2-virtual transit node l'1-order demand point j3, but when constructing the objective function, it is obtained that there is a transportation relationship between the order sending point k1 and the transit node l2, but there is no transportation relationship between the virtual transit node l'1 and the order demand point j3, that is, it can be obtained that the constructed distribution route 1 is from the order sending point k1 to the transit node l2. Because the distribution route in the target distribution network must start from the order sending point and end at the order demand point, and the above distribution route 1 does not meet the requirement of the distribution route in the target distribution network, the distribution route 1 is an invalid route and the invalid route should be deleted when performing statistics on the transportation efficiency of the target distribution network.

In step 1032b, a minimum value of the sum of the first sub-function, the second sub-function and the third sub-function is taken to obtain the objective function.

In the embodiments of the present disclosure, in order to select the distribution route with the minimum transportation efficiency, the minimum value of the transportation efficiency in the target distribution network can be calculated, that is, the minimum value of the sum of the first sub-function, the second sub-function and the third sub-function can be taken, and the minimum value is used as the objective function.

For example, in the embodiments of the present disclosure, the first sub-function, the second sub-function and the third sub-function can be input into the objective function to calculate the minimum value of the sum of the first sub-function, the second sub-function and the third sub-function, then the minimum value is determined as the transportation efficiency in the target distribution network, where the objective function can be:

$$L = \text{Min}\left[\sum_{k\in K}\sum_{l\in L}\sum_{j\in J} f_{kj}\, d_{kl}\, x_{kl} + \sum_{l\in L}\sum_{l'\in L'}\sum_{k\in K}\sum_{j\in J} f_{kj}\, d_{ll'}\, x_{kl}\, y_{l'j} + \sum_{l'\in L'}\sum_{j\in J}\sum_{k\in K} f_{kj}\, d_{l'j}\, y_{l'j}\right]$$

Min is taking the minimum value, and other contents are as above, and will not be repeated here.

Optionally, in an implementation of the present disclosure, the embodiments of the present disclosure may also perform the following steps.

In step S11, based on the target order quantity, the order transportation quantity in the target distribution network is determined by performing statistics on the transportation relationships in the target distribution network.

In the embodiments of the present disclosure, the order transportation quantity in the target distribution network may be the total order quantity when multiple distribution routes included in the target distribution network are simultaneously transporting orders. Based on the target order quantity, determining the order transportation quantity in the target distribution network by performing statistics on the transportation relationship in the target distribution network may be: first allocating the order transportation quantity to each order sending point based on the target order quantity, and then according to the transportation relationships between individual nodes in the target distribution network and the order quantity distributed on each order sending point, determining the order quantity that needs to be transported on each distribution route, and using the sum of the order quantities that need to be transported by each distribution route as the order transportation quantity in the target distribution network.

It should be noted that the allocation of order quantities for each order sending point may be determined according to the orders that can be stored at each order sending point, or may be manually input. For example, the order sending point includes a warehouse 1 and a warehouse 2. The warehouse 1 only stores fresh orders, and the warehouse 2 stores orders other than fresh food. When the target order quantity is 100, including 30 fresh orders, then when allocating the order quantity for each order sending point, the warehouse 1 may be allocated 30 fresh orders, and the warehouse 2 may be allocated 70 other orders.

In step S12, the order transportation quantity being not greater than the maximum carrying capacity of the target transit node is taken as the first constraint condition; the target transit node is any transit node in the target distribution network.

In the embodiments of the present disclosure, the target transit node may be the same transit node through which multiple distribution routes pass. For example, the distribution route 1 passes through the transit node 2, the distribution route 2 passes through the transit node 2, the distribution route 3 passes through the transit node 1, and the distribution route 4 passes through the transit node 2, then it can be obtained that the transit node 2 is the target transit node of the distribution route 1, the distribution route 2, and the distribution route 4, the sum of the order quantities on the distribution route 1, the distribution route 2, and the distribution route 4 is taken as the order transportation quantity $n$, and the maximum carrying capacity on the transit node 2 is $m$, then the order transportation quantity $n$ not greater than the maximum carrying capacity m of the target transit node may be taken as the first constraint condition.

It should be noted that since the maximum carrying capacities of different transit nodes are different, the same distribution route can pass through at least two transit nodes, and the transportation relationship between the transit nodes has been determined, in the embodiments of the present disclosure, the minimum value of the maximum carrying capacity passing through at least two transit nodes is taken, and the minimum value is used as the maximum carrying capacity of the target transit node. By determining the minimum value of the maximum carrying capacity of at least two transit nodes and using the minimum value as the maximum carrying capacity of the target transit node, it is possible to avoid the distribution failure of the order due to the maximum carrying capacity of the transit node during the actual transportation process, thereby improving the accuracy of the transportation efficiency of the target distribution network.

As an example, in the embodiments of the present disclosure, the target order quantity and the transportation relationship between each node in the target distribution network can be input into a first preset function to calculate the product of the transportation relationship and the target order quantity, and then the product is determined as the first constraint condition, where the first constraint condition can be:

$$\sum_{k \in K} \sum_{j \in J} x_{kl} f_{kj} + \sum_{k \in K} \sum_{j \in J} y_{l'j} f_{kj} - \sum_{k \in K} \sum_{j \in J} x_{kl} y_{l'j} f_{kj} \leq Cap_{(l,l')} \ \forall \ (l,l') \in (L, L')$$

$\sum_{k \in K} \sum_{j \in J} x_{kl} f_{kj}$ represents the order transportation quantity from the order sending point K to the transit node L, $\sum_{k \in K} \sum_{j \in J} y_{l'j} f_{kj}$ represents the order transportation quantity from the virtual transit node L' to the order demand point J, $\sum_{k \in K} \sum_{j \in J} x_{kl'} y_{l'j} f_{kj}$ represents the order transportation quantity from the transit node L to the virtual transit node L', Cap(1, l') is the maximum carrying capacity of the target transit node.

In the embodiments of the present disclosure, based on the target order quantity, the transportation relationship in the target distribution network is counted to determine the order transportation quantity in the target distribution network, and the order transportation quantity being not greater than the maximum carrying capacity of the target transit node is taken as the first constraint condition, and the target transit node is any transit node in the target distribution network. In this way, according to the maximum capacity of the transit node as a constraint condition, it is possible to avoid the situation that the transit node cannot carry the order in the actual order transportation, so that when the first constraint condition is used to calculate the transportation efficiency of the target distribution network, it is more in line with the actual transportation situation of the order, and therefore, the accuracy of calculating the transportation efficiency of the target distribution network can be improved.

Optionally, in an implementation of the present disclosure, the above-mentioned step of calculating the transportation efficiency corresponding to the target distribution network in the embodiments of the present disclosure may further include the following steps.

In step 1041, in the case that the objective function satisfies that any of the order sending points only has a one-way transportation relationship with one of the transit nodes, and at the same time, any of the order demand points only has a one-way transportation relationship with one of the virtual transit nodes, the step of calculating the transportation efficiency corresponding to the target distribution network is performed.

In the embodiments of the present disclosure, in the process of logistics distribution, the distribution direction of the order is determined, it is transported from the order sending point to the order demand point, and the distribution process of each order is not repeatable. Therefore, in the statistics of the transportation efficiency in the target distribution network, it is necessary to determine the objective function to meet the actual order distribution requirement, that is, any order sending point has a one-way transportation relationship with only one transit node, and any order demand point only has a one-way transportation relationship with one virtual transit node. Only when the objective function satisfies the actual order distribution requirement, the embodiments of the present disclosure will execute the step of calculating the transportation efficiency corresponding to the target distribution network.

As an example, the constraint condition between the order sending point K and the transit node L in the actual order distribution requirement can be expressed by the following formula:

$$\sum_{l \in L} x_{kl} = 1 \quad \forall\, k \in K$$

$\Sigma_{l \in L} x_{kl}$ is the transportation relationship between each order sending point K and each transit node L.

The constraint condition between the virtual transit node L' and the order demand point J in the actual order distribution requirement can be expressed by the following formula:

$$\sum_{l' \in L} y_{l'j} = 1 \quad \forall\, j \in J$$

$\Sigma_{l' \in L} y_{l'j}$ is the transportation relationship between each virtual transit node L' and each order demand point J.

Optionally, in another implementation of the present disclosure, the above-mentioned step of calculating the transportation efficiency corresponding to the target distribution network in the embodiments of the present disclosure may further include the following steps:

calculating the objective function and the first constraint condition by using a preset solver to obtain the transportation efficiency corresponding to the target distribution network.

In the embodiments of the present disclosure, the preset solver may be preset according to the actual situation. For example, the preset solver may be the mathematical optimization technology CPLEX, or a mathematical programming optimizer (Gurobi), or a mathematical programming and optimized advanced modeling system (The General Algebraic Modeling System, GAMS). The calculation of the objective function and the first constraint condition by using the preset solver to obtain the transportation efficiency corresponding to the target distribution network may be: inputting the objective function and the first constraint condition into the preset solver, performing calculation by using the preset solver to obtain a calculation result, and using the calculation result as the transportation efficiency corresponding to the target distribution network.

It should be noted that since different solvers require different input data formats, before inputting the objective function and the first constraint condition into the preset solver, data in the objective function and the first preset condition can also be transformed so that the transformed data can adapt to the requirement of the preset solver, and the transformed data is input into the preset solver to calculate the objective function and obtain the transportation efficiency corresponding to the target distribution network.

Optionally, in an implementation of the present disclosure, the embodiments of the present disclosure may further include the following steps.

In step S41, a first order quantity input for the order sending point or the order demand point is received.

In the embodiments of the present disclosure, since different order quantities are input for the order sending point or the order demand point, different transportation efficiencies in the target distribution network can be obtained. Therefore, the embodiments of the present disclosure can receive the first order quantity input for the order sending point or the order demand point, and the first order quantity may be an order quantity input by the user that is different from the value of the target order quantity.

In step S42, the transportation efficiency corresponding to the target distribution network is calculated based on the first order quantity.

In the embodiments of the present disclosure, it may be calculated in the objective function according to the first order quantity, and the calculation result may be used as the transportation efficiency corresponding to the first order quantity. For example, the first order quantity m1 input for the order sending point can be received, and the transportation efficiency M1 corresponding to the first order quantity ml can be calculated through the objective function, or the first order quantity n1 input for the order demand point can be received, and the transportation efficiency N1 corresponding to the first order quantity n1 can be calculated through the objective function.

In step S43, in the target distribution network, the transportation efficiency corresponding to the first order quantity is compared with the transportation efficiency corresponding to the target order quantity, and the order quantity with the minimum required transportation efficiency is determined.

In the embodiments of the present disclosure, the transportation efficiency corresponding to the first order quantity input to the order sending point can be compared with the transportation efficiency corresponding to the target order quantity, to determine the change law of the transportation efficiency in the target distribution network and the change law of the distribution route with the minimum transportation efficiency when the order quantity at the order sending point is increased or decreased. For example, it can be obtained that when the order quantity on the order sending point 1 is larger, the corresponding transportation efficiency is smaller. It is also possible to compare the transportation efficiency corresponding to the first order quantity input in the order demand point with the transportation efficiency corresponding to the target order quantity, to determine the change law of the transportation efficiency in the target distribution network and the change law of the distribution route with the least transportation efficiency when increasing or decreasing the order quantity at the order demand point. For example, it can be obtained that when the order quantity at the order demand point 2 is larger, the corresponding transportation efficiency is greater.

It should be noted that, in the embodiments of the present disclosure, different order quantities can also be input to the order sending point and the order demand point at the same time, so as to determine the change law of the transportation efficiency when the order quantity on the order sending point and the order demand point are changed at the same time. In the embodiments of the present disclosure, according to the order distribution ratio on each order sending point, or the order distribution ratio on each order demand point, the change law of the transportation efficiency when changing the order quantity at the order sending point according to the order distribution ratio or changing the order quantity at the order demand point according to the order distribution ratio can also be determined.

In the embodiments of the present disclosure, by receiving the first order quantity input for the order sending point or the order demand point, the transportation efficiency corresponding to the target distribution network is calculated based on the first order quantity, and the transportation efficiency corresponding to the first order quantity is compared with the transportation efficiency corresponding to the target order quantity in the target distribution network, to determine the order quantity with the minimum transportation efficiency. In this way, the corresponding transportation efficiency in the target distribution network is determined according to different order quantities, so that the impact of the change of the order quantity on the transportation efficiency can be determined, which facilitates the user to select the appropriate order quantity according to the demand in the future, and transport the order by the distribution route with the lowest transportation efficiency.

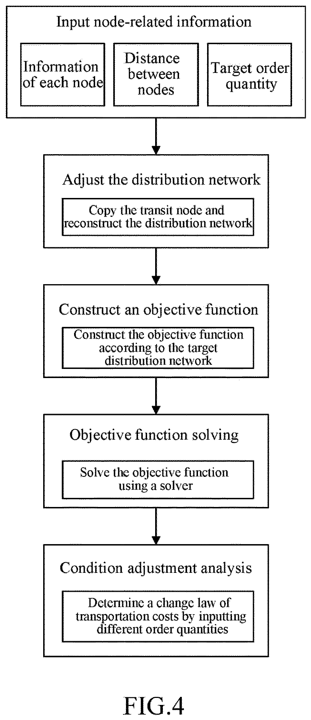

For example, FIG. 4 is a schematic diagram of a distribution route determination process provided by an embodiment of the present disclosure. As shown in FIG. 2, the first step is to input node-related information, which includes information about each node. For example, a node 1 is an order sending point, a node 2 is the transit node and so on. The second step is to adjust the distribution network. For example, after the initial distribution network is generated according to the node-related information, the initial distribution network is reconstructed by copying the transit node, and the reconstructed distribution network is used as the target distribution network. The third step is to construct the objective function, and the objective function may be constructed according to the transportation relationship between the target distribution network and each node. The fourth step is to solve the objective function, and the objective function may be solved by using a preset solver to obtain the transportation efficiency of the target distribution network when the target order quantity is transported. The fifth step is condition adjustment analysis, which can determine the change law of transportation efficiency by inputting different order quantities for the order sending point or order demand point respectively.

It should be noted that, for the distribution route determination method provided in the embodiments of the present disclosure, the execution subject may be a distribution route determination apparatus, or a control module in the distribution route determination apparatus for executing the distribution route determination method. In the embodiments of the present disclosure, the distribution route determination method being performed by the distribution route determination apparatus is taken as an example to illustrate the distribution route determination apparatus provided by the embodiments of the present disclosure.

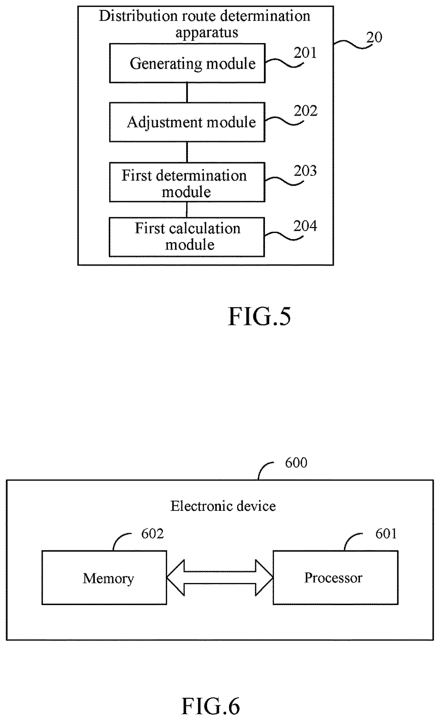

FIG. 5 is a block diagram of a distribution route determination apparatus provided by an embodiment of the present disclosure. As shown in FIG. 5, the apparatus 20 may include:

a generating module 201, configured to generate an initial distribution network according to logistics-related information;

an adjustment module 202, configured to construct a virtual node based on a transit node in the initial distribution network, and adjust the initial distribution network to a target distribution network;

a first determination module 203, configured to determine an objective function based on the target distribution network and the corresponding logistics-related information; the objective function being used to represent a transportation efficiency of the target distribution network; and

a first calculation module 204, configured to calculate the transportation efficiency corresponding to the target distribution network according to the objective function and a first constraint condition, so as to select a distribution route with a minimum transportation efficiency; the first constraint condition being determined based on a maximum load capacity on the transit node.

To sum up, the distribution route determination apparatus provided by the embodiments of the present disclosure can generate an initial distribution network based on logistics-related information, construct a virtual node based on a transit node in the initial distribution network, adjust the initial distribution network to a target distribution network, then determine the objective function based on the target distribution network and the corresponding logistics-related information, the objective function being used to represent the transportation efficiency of the target distribution network, and finally, according to the objective function and the first constraint condition, calculate the transportation efficiency corresponding to the target distribution network to select the distribution route with the minimum transportation efficiency, where the first constraint condition is determined according to the maximum carrying capacity of the transit node. In this way, in the actual logistics transportation process, there is often a transportation relationship between the transit nodes, and the distribution network is adjusted by constructing the virtual node corresponding to the transit node, so that the obtained target distribution network is more in line with the actual logistics distribution scene, and the generated distribution route is more consistent with the actual distribution transportation route, thus the transportation efficiency calculated based on the target distribution network is more accurate, and accordingly the selection of the distribution route with the smallest transportation efficiency is more authentic.

Optionally, the initial distribution network includes at least two transit nodes;

the adjustment module 202 is further specifically configured to:
in the initial distribution network, construct at least two corresponding virtual nodes according to the at least two transit nodes;
adjust a two-way transportation relationship between the at least two transit nodes to a one-way transportation relationship between the at least two transit nodes and the at least two virtual nodes to obtain the target distribution network.

Optionally, when the transit node and the virtual node represent the same node, the distance between the transit node and the virtual node is zero; when the transit node and the virtual node represent different nodes, the distance between the transit node and the virtual node is the distance between the transit node and the transit node corresponding to the virtual node.

Optionally, the initial distribution network also includes an order sending point and an order demand point; the logistics-related information includes a distance between the nodes and a target order quantity.

The first determination module 203 is further specifically configured to:

according to the distance between the nodes and the target order quantity, determine a first efficiency, a second efficiency, and a third efficiency, respectively; the first efficiency is the transportation efficiency from the order sending point to the transit node; the second efficiency is the transportation efficiency from the virtual transit node to the order demand point; the third efficiency is the transportation efficiency from the transit node to the virtual transit node; based on the transportation relationship in the target distribution network, performing statistics on the first efficiency, the second efficiency, and the third efficiency to obtain the objective function.

Optionally, the first determination module 203 is further specifically configured to:

according to the transportation relationship between each of the order sending points and each of the transit nodes, sum the first efficiencies to obtain a first sub-function; according to the transportation relationship between each of the virtual transit nodes and each of the order demand points, sum the second efficiencies to obtain a second sub-function; according to the transportation relationship between each of the transit nodes and each of the virtual transit nodes, sum the third efficiencies to obtain a third sub-function;
taking a minimum value of a sum of the first sub-function, the second sub-function and the third sub-function to obtain the objective function.

Optionally, the apparatus 20 further includes:

a second determination module, configured to determine an order transportation quantity in the target distribution network by performing statistics on the transportation relationship in the target distribution network based on the target order quantity;
a third determination module, configured to use the order transportation quantity being not greater than a maximum carrying capacity of a target transit node as a first constraint condition; where the target transit node is any transit node in the target distribution network.

Optionally, the first calculation module 204 is further specifically configured to:
when the objective function satisfies that any of the order sending points only has a one-way transportation relationship with one of the transit nodes, and at the same time, any of the order demand points only has a one-way transportation relationship with one of the virtual transit nodes, execute the step of calculating the transportation efficiency corresponding to the target distribution network.

Optionally, the first calculation module 204 is further specifically configured to:
calculate the objective function and the first constraint condition by using a preset solver to obtain the transportation efficiency corresponding to the target distribution network.

Optionally, the apparatus 20 further includes:

a receiving module, configured to receive a first order quantity input for the order sending point or the order demand point;

a second calculation module, configured to calculate the transportation efficiency corresponding to the target distribution network based on the first order quantity;

a comparing module, configured to compare the transportation efficiency corresponding to the first order quantity with the transportation efficiency corresponding to the target order quantity in the target distribution network, and determine the order quantity with the minimum required transportation efficiency.

The distribution route determination apparatus in the embodiments of the present disclosure may be an apparatus, or may be a component, an integrated circuit, or a chip in a terminal. The apparatus may be a mobile electronic device or a non-mobile electronic device. Exemplarily, the mobile electronic device may be a mobile phone, a tablet computer, a notebook computer, a handheld computer, a vehicle electronic device, a wearable device, an ultra-mobile personal computer (UMPC), a netbook or a personal digital assistant (PDA), etc., the non-mobile electronic device may be a server, a Network Attached Storage (NAS), a personal computer (PC), a television (TV), a teller machine or a self-service machine, etc., which are not specifically limited in the embodiments of the present disclosure.

The distribution route determination apparatus in the embodiments of the present disclosure may be an apparatus with an operating system. The operating system may be an Android operating system, an ios operating system, or other possible operating systems, which are not specifically limited in the embodiments of the present disclosure.

The distribution route determination apparatus provided by the embodiments of the present disclosure can implement various processes implemented by the method embodiments in FIG. 1 to FIG. 4, and details are not repeated here to avoid repetition.

Optionally, as shown in FIG. 6, an embodiment of the present disclosure further provides an electronic device 600, including a processor 601, a memory 602, and a program or instruction stored in the memory 602 and operable on the processor 601. When the program or instruction is executed by the processor 601, the various processes of the above-mentioned distribution route determination method embodiments can be realized, and the same technical effect can be achieved. To avoid repetition, details are not repeated here.

It should be noted that the electronic device in the embodiments of the present disclosure include the above-mentioned mobile electronic devices and non-mobile electronic devices.

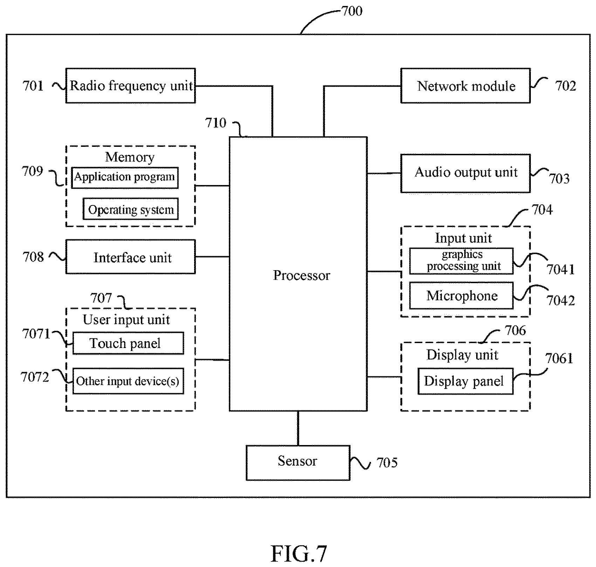

FIG. 7 is a schematic diagram of a hardware structure of an electronic device implementing the embodiments of the present disclosure.

The electronic device 700 includes, but is not limited to: a radio frequency unit 701, a network module 702, an audio output unit 703, an input unit 704, a sensor 705, a display unit 706, a user input unit 707, an interface unit 708, a memory 709, a processor 710, and other components.

Those skilled in the art can understand that the electronic device 700 can also include a power supply (such as a battery) for supplying power to various components, and the power supply can be logically connected to the processor 710 through the power management system, so that the management of charging and discharging, consumption management and other functions can be realized through the power management system. The structure of the electronic device shown in FIG. 7 does not constitute a limitation to the electronic device. The electronic device may include more or fewer components than shown in the figure, or combine some components, or use a different component arrangement, and details will not be repeated here.

The processor 710 is configured to generate an initial distribution network according to logistics-related information.

The processor 710 is configured to construct a virtual node based on a transit node in the initial distribution network, and adjust the initial distribution network to a target distribution network.

The processor 710 is configured to determine an objective function based on the target distribution network and the corresponding logistics-related information; where the objective function is used to represent a transportation efficiency of the target distribution network.

The processor 710 is configured to calculate the transportation efficiency corresponding to the target distribution network according to the objective function and a first constraint condition, so as to select a distribution route with a minimum transportation efficiency; where the first constraint condition is determined based on a maximum carrying capacity on the transit node.

To sum up, the distribution route determination method provided by the embodiments of the present disclosure can generate an initial distribution network based on logistics-related information, construct the virtual node based on

14

the transit node in the initial distribution network, adjust the initial distribution network to a target distribution network, and then based on the target distribution network and the corresponding logistics-related information, determine the objective function, the objective function being used to represent the transportation efficiency of the target distribution network, and finally, according to the objective function and the first constraint condition, calculate the transportation efficiency corresponding to the target distribution network to select the distribution route with the minimum transportation efficiency, where the first constraint condition is determined according to the maximum carrying capacity of the transit node. In this way, in the actual logistics transportation process, there is often a transportation relationship between the transit nodes, and the distribution network is adjusted by constructing the virtual node corresponding to the transit node, so that the obtained target distribution network is more in line with the actual logistics distribution scene, and the generated distribution route is more consistent with the actual distribution transportation route, thus the transportation efficiency calculated based on the target distribution network is more accurate, and accordingly the selection of the distribution route with the smallest transportation efficiency is more authentic.

It should be understood that, in the embodiments of the present disclosure, the input unit 704 may include a Graphics Processing Unit (GPU) 7041 and a microphone 7042, and the graphics processing unit 7041 processes the image data of still pictures or videos obtained by an image capture apparatus (such as a camera) in a video capture mode or an image capture mode. The display unit 706 may include a display panel 7061, and the display panel 7061 may be configured in the form of a liquid crystal display, an organic light emitting diode, or the like. The user input unit 707 includes a touch panel 7071 and other input devices 7072. The touch panel 7071 is also called a touch screen. The touch panel 7071 may include two parts, a touch detection apparatus and a touch controller. Other input devices 7072 may include, but are not limited to, physical keyboards, function keys (such as volume control buttons, switch buttons, etc.), trackballs, mice, and joysticks, which will not be described in detail here. The memory 709 may be used to store software programs and various data, including but not limited to application programs and operating systems. The processor 710 may integrate an application processor and a modem processor, where the application processor mainly processes an operating system, user interface, application program, etc., and the modem processor mainly processes wireless communication. It can be understood that the foregoing modem processor may not be integrated into the processor 710.

An embodiment of the present disclosure also provides a readable storage medium, on which a program or an instruction is stored, and when the program or instruction is executed by a processor, each process of the above distribution route determination method embodiments is realized, and the same technical effects can be achieved, which are not repeated here to avoid repetition.

The processor is the processor in the electronic device described in the above embodiments. The readable storage medium includes a computer readable storage medium, such as a computer Read-Only Memory (ROM), a Random Access Memory (RAM), a magnetic disk or an optical disk, etc.

An embodiment of the present disclosure further provides a chip, the chip includes a processor and a communication interface, the communication interface is coupled to the processor, and the processor is configured to run programs or instructions to implement each process in the above distribution route determination method embodiments, and the same technical effects can be achieved, which will not repeated here for avoiding repetition.

It should be understood that the chip mentioned in the embodiments of the present disclosure may also be referred to as a system-level chip, a system chip, a chip system, or a system-on-chip.

It should be noted that, in the present disclosure, the term "comprise", "include" or any other variation thereof is intended to cover a non-exclusive inclusion such that a process, method, article or apparatus including a set of elements includes not only those elements, but also other elements not expressly listed, or elements inherent in the process, method, article, or apparatus. Without further limitations, an element defined by the phrase "including a..." does not preclude the presence of additional identical elements in the process, method, article, or apparatus including that element. In addition, it should be noted that the scope of the methods and apparatus in the disclosed embodiments is not limited to performing functions in the order shown or discussed, and may also include performing functions in a substantially simultaneous manner or in a reverse order depending on the functions involved. For example, the described methods may be performed in an order different from that described, and various steps may also be added, omitted, or combined. Additionally, features described with reference to certain examples may be combined in other examples.

Through the description of the above implementations, those skilled in the art can clearly understand that the methods of the above embodiments can be implemented by means of software plus a necessary general-purpose hardware platform, or by hardware, but in many cases the former is a better implementation. Based on such an understanding, the essence or the part that contributes to the related art of the technical solution of the present disclosure can be embodied in the form of a software product, and the computer software product is stored in a storage medium (such as ROM/RAM, disk, CD) and contains several instructions to enable a terminal (which may be a mobile phone, a computer, a server, an air conditioner, or a network device, etc.) to execute the methods described in various embodiments of the present disclosure.

The embodiments of the present disclosure have been described above in conjunction with the accompanying drawings, but the present disclosure is not limited to the above-mentioned specific implementations. The above-mentioned specific implementations are only illustrative and not restrictive. Under the inspiration of the present disclosure, without departing from the purpose of the present disclosure and the protection scope of the claims, many forms can be made, all of which are within the protection of the present disclosure.

**Claims**

1. A distribution route determination method, wherein the method comprises:

   generating an initial distribution network according to logistics-related information;
   constructing a virtual node based on a transit node in the initial distribution network, and adjusting the initial distribution network to a target distribution network;
   determining an objective function based on the target distribution network and the corresponding logistics-related information; wherein the objective function is used to represent a transportation efficiency of the target distribution network; and
   calculating the transportation efficiency corresponding to the target distribution network according to the objective function and a first constraint condition, so as to select a distribution route with a minimum transportation efficiency; wherein the first constraint condition is determined according to a maximum carrying capacity on the transit node.

2. The method according to claim 1, wherein the initial distribution network comprises at least two transit nodes; constructing the virtual node based on the transit node in the initial distribution network, and adjusting the initial distribution network to the target distribution network, comprises:

   in the initial distribution network, constructing at least two corresponding virtual nodes according to the at least two transit nodes; and
   adjusting a two-way transportation relationship between the at least two transit nodes to a one-way transportation relationship between the at least two transit nodes and the at least two virtual nodes to obtain the target distribution network.

3. The method according to claim 2, wherein in response to that the transit node and the virtual node represent a same node, a distance between the transit node and the virtual node is zero, and in response to that the transit node and the virtual node represent different nodes, the distance between the transit node and the virtual node is a distance between the transit node and a transit node corresponding to the virtual node.

4. The method according to claim 2, wherein the initial distribution network further comprises an order sending point and an order demand point; the logistics-related information comprises a distance between the nodes and a target order quantity;
   determining the objective function based on the target distribution network and the corresponding logistics-related information comprises:

   determining a first efficiency, a second efficiency and a third efficiency according to the distance between the nodes and the target order quantity, respectively; wherein the first efficiency is a transportation efficiency of transporting from the order sending point to the transit node; the second efficiency is a transportation efficiency of transporting from the virtual transit node to the order demand point; and the third efficiency is a transportation efficiency of transporting from the transit node to the virtual transit node; and
   performing statistics on the first efficiency, the second efficiency, and the third efficiency based on the transportation relationship in the target distribution network to obtain the objective function.

5. The method according to claim 4, wherein performing the statistics on the first efficiency, the second efficiency and the third efficiency based on the transportation relationship in the target distribution network to obtain the objective function, comprises:

   summing the first efficiencies according to the transportation relationship between each of the order sending points and each of the transit nodes to obtain a first sub-function; summing the second efficiencies according to the transportation relationship between each of the virtual transit nodes and each of the order demand points to obtain a second sub-function; summing the third efficiencies according to the transportation relationship between each of the transit nodes and each of the virtual transit nodes to obtain a third sub-function;

taking a minimum value of a sum of the first sub-function, the second sub-function and the third sub-function to obtain the objective function.

**6.** The method according to claim 4 or 5, wherein the method further comprises:

based on the target order quantity, by performing statistics on the transportation relationship in the target distribution network, determining an order transportation quantity in the target distribution network;

using the order transportation quantity being not greater than a maximum carrying capacity of a target transit node as the first constraint condition; wherein the target transit node is any transit node in the target distribution network.

**7.** The method according to any one of claims 1 to 5, wherein calculating the transportation efficiency corresponding to the target distribution network comprises:

in a case that the objective function satisfies that any of the order sending points only has a one-way transportation relationship with one of the transit nodes, and at the same time, any of the order demand points only has a one-way transportation relationship with one of the virtual transit nodes, executing a step of calculating the transportation efficiency corresponding to the target distribution network.

**8.** The method according to claim 1, wherein calculating the transportation efficiency corresponding to the target distribution network comprises:
calculating the objective function and the first constraint condition by using a preset solver to obtain the transportation efficiency corresponding to the target distribution network.

**9.** The method according to claim 3, wherein the method further comprises:

receiving a first order quantity input for the order sending point or the order demand point;

calculating the transportation efficiency corresponding to the target distribution network based on the first order quantity;

in the target distribution network, comparing the transportation efficiency corresponding to the first order quantity with the transportation efficiency corresponding to a target order quantity, and determining an order quantity with a minimum required transportation efficiency.

**10.** A distribution route determination apparatus, wherein the apparatus comprises:

a generating module, configured to generate an initial distribution network according to logistics-related information;

an adjustment module, configured to construct a virtual node based on a transit node in the initial distribution network, and adjust the initial distribution network to a target distribution network;

a first determination module, configured to determine an objective function based on the target distribution network and the corresponding logistics-related information; wherein the objective function is used to represent a transportation efficiency of the target distribution network; and

a first calculation module, configured to calculate the transportation efficiency corresponding to the target distribution network according to the objective function and a first constraint condition, so as to select a distribution route with a minimum transportation efficiency; wherein the first constraint condition is determined according to a maximum carrying capacity on the transit node.

**11.** An electronic device, comprising a processor, a memory, and a program or instruction stored on the memory and operable on the processor, wherein when the program or instruction is executed by the processor, the steps of the distribution route determination method according to any one of claims 1-9 are implemented.

**12.** A readable storage medium, wherein the readable storage medium stores a program or instruction, and when the program or instruction is executed by a processor, the steps of the distribution route determination method according to any one of claims 1-9 are implemented.

Generate an initial distribution network according to logistics-related information — 101

Adjust the initial distribution network to a target distribution network by means of backing up virtual nodes in the initial distribution network — 102

Determine an objective function on the basis of the target distribution network and the corresponding logistics-related information; wherein the objective function is used for representing the transportation efficiency of the target distribution network — 103

According to the objective function and a first constraint condition, calculate the transportation efficiency corresponding to the target distribution network, so as to select a distribution route having the minimum transportation efficiency, wherein the first constraint condition is determined according to the maximum bearing capacity on the transit nodes — 104

FIG.1

FIG.2

FIG.3

```
┌─────────────────────────────────────────┐
│         Input node-related information    │
│  ┌───────────┐ ┌──────────┐ ┌──────────┐ │
│  │Information │ │ Distance │ │Target order│
│  │of each node│ │ between  │ │ quantity │ │
│  │           │ │  nodes   │ │          │ │
│  └───────────┘ └──────────┘ └──────────┘ │
└─────────────────────────────────────────┘
                    │
                    ▼
┌─────────────────────────────────────────┐
│        Adjust the distribution network    │
│  ┌─────────────────────────────────────┐ │
│  │      Copy the transit node and       │ │
│  │ reconstruct the distribution network │ │
│  └─────────────────────────────────────┘ │
└─────────────────────────────────────────┘
                    │
                    ▼
┌─────────────────────────────────────────┐
│         Construct an objective function   │
│  ┌─────────────────────────────────────┐ │
│  │   Construct the objective function   │ │
│  │        according to the target       │ │
│  │         distribution network         │ │
│  └─────────────────────────────────────┘ │
└─────────────────────────────────────────┘
                    │
                    ▼
┌─────────────────────────────────────────┐
│          Objective function solving       │
│  ┌─────────────────────────────────────┐ │
│  │      Solve the objective function    │ │
│  │            using a solver            │ │
│  └─────────────────────────────────────┘ │
└─────────────────────────────────────────┘
                    │
                    ▼
┌─────────────────────────────────────────┐
│        Condition adjustment analysis      │
│  ┌─────────────────────────────────────┐ │
│  │      Determine a change law of       │ │
│  │  transportation costs by inputting   │ │
│  │       different order quantities     │ │
│  └─────────────────────────────────────┘ │
└─────────────────────────────────────────┘
```

FIG.4

Distribution route determination apparatus

Generating module — 201

Adjustment module — 202

First determination module — 203

First calculation module — 204

20

## FIG.5

600

Electronic device

602

Memory

601

Processor

## FIG.6

—700

701 — Radio frequency unit

Network module — 702

710 —

Memory
709 — Application program

Operating system

Audio output unit — 703

— 704
Input unit
graphics
processing unit — 7041

Microphone — 7042

708 — Interface unit

Processor

707 —
User input unit
7071 — Touch panel

7072 — Other input device(s)

— 706
Display unit — 7061
Display panel

Sensor — 705

FIG.7

**EP 4 394 674 A1**

## INTERNATIONAL SEARCH REPORT

| International application No. |
| --- |
| **PCT/CN2022/110936** |

### A. CLASSIFICATION OF SUBJECT MATTER

G06Q 10/08(2012.01)i

According to International Patent Classification (IPC) or to both national classification and IPC

### B. FIELDS SEARCHED

Minimum documentation searched (classification system followed by classification symbols)

G06Q; G06F

Documentation searched other than minimum documentation to the extent that such documents are included in the fields searched

Electronic data base consulted during the international search (name of data base and, where practicable, search terms used)

WPI, EPODOC, CNKI, CNPAT, IEEE: 节点, 中转, 仓库, 虚拟, 分拣, 复制, 重构, 目标, 路径, 双向, 单向, 订单, 配送, 路线, 规划, path+, track, channel, road, line, plan+, virtua+, dummy, temporary, simulat+

### C. DOCUMENTS CONSIDERED TO BE RELEVANT

| Category* | Citation of document, with indication, where appropriate, of the relevant passages | Relevant to claim No. |
| --- | --- | --- |
| PX | CN 114118632 A (BEIJING JINGDONG ZHENSHI INFORMATION TECHNOLOGY CO., LTD.) 01 March 2022 (2022-03-01)<br>claims 1-12 | 1-12 |
| Y | CN 113673932 A (BEIJING JINGDONG ZHENSHI INFORMATION TECHNOLOGY CO., LTD.) 19 November 2021 (2021-11-19)<br>description, paragraphs 0046-0151 | 1, 7, 8, 10-12 |
| Y | CN 113128761 A (TIANJIN UNIVERSITY) 16 July 2021 (2021-07-16)<br>description, paragraphs 0049-0080 | 1, 7, 8, 10-12 |
| A | CN 113762830 A (BEIJING JINGDONG ZHENSHI INFORMATION TECHNOLOGY CO., LTD.) 07 December 2021 (2021-12-07)<br>entire document | 1-12 |
| A | US 2020327497 A1 (FEDERAL EXPRESS CORPORATION) 15 October 2020 (2020-10-15)<br>entire document | 1-12 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **27 October 2022** | **02 December 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/110936**

| Patent document cited in search report | | | Publication date (day/month/year) | Patent family member(s) | Publication date (day/month/year) |
|---|---|---|---|---|---|
| CN | 114118632 | A | 01 March 2022 | None | |
| CN | 113673932 | A | 19 November 2021 | None | |
| CN | 113128761 | A | 16 July 2021 | None | |
| CN | 113762830 | A | 07 December 2021 | None | |
| US | 2020327497 | A1 | 15 October 2020 | None | |

Form PCT/ISA/210 (patent family annex) (January 2015)

## REFERENCES CITED IN THE DESCRIPTION

**Patent documents cited in the description**

- CN 202210083327